# EUROPÄISCHE PATENTANMELDUNG

(11) **EP 3 517 283 A1**
(43) Veröffentlichungstag der Anmeldung: **31.07.2019**
(21) Anmeldenummer: 18154159.0
(22) Anmeldetag: 30.01.2018
(51) Int. Cl.: B29C 70/88, C08J 9/228, C08J 9/236

(54) **THERMISCH LEITFÄHIGES SCHAUMMATERIAL**

(71) Anmelder: Siemens Aktiengesellschaft, 80333 München (DE)
(72) Erfinder: Heller, Janis, 97616 Bad Neustadt (DE); Huber, Jürgen, 91058 Erlangen (DE); Katzenberger, Tobias, 97631 Bad Königshofen STT Untereßfeld (DE); Plochmann, Bastian, 91413 Neustadt an der Aisch (DE)

(57) **Zusammenfassung**

Die vorliegende Erfindung betrifft ein Hartschaumsystem (20), das einen Hartschaum (24) aufweist und aus einem ersten Zustand in einen zweiten Zustand überführbar ist. Dabei ist der erste Zustand flüssig und der zweite Zustand fest. Das Volumen des Hartschaumsystems (20) im zweiten Zustand ist um wenigstens 5 % größer als das Volumen im ersten Zustand. Bei elektrischen Maschinen ist er häufig gewünscht, dass unterschiedliche Komponenten thermisch miteinander verbunden sind, dabei jedoch diese Komponenten elektrisch isoliert bleiben. Daher zeichnet sich das Hartschaumsystem (20) dadurch aus, dass ihm zur Erhöhung der thermischen Leitfähigkeit metallische Partikel (22) homogen als Zusatz beigemischt sind und zugleich die Konzentration der beigemischten metallischen Partikel (22) unterhalb der Perkolationsschwelle liegt.

## Beschreibung

Die vorliegende Erfindung betrifft ein Hartschaumsystem, das einen Hartschaum aufweist. Das Hartschaumsystem hat dabei eine höhere thermische Leitfähigkeit als im Stand der Technik bekannte Schaumsysteme.

Elektrische Komponenten, welche sich zum Beispiel in einem Gehäuse befinden, müssen häufig gegen Umwelteinflüsse geschützt, mechanisch stabilisiert oder elektrisch isoliert werden. Oftmals ist auch die Entwärmung diverser Bauteile beziehungsweise die thermische Ankopplung dieser Bauteile an die Gehäuseinnenwand wünschenswert beziehungsweise relevant. Nach dem Kenntnisstand der Anmelderin werden dabei standardmäßig Vergusssysteme eingesetzt, zum Beispiel flüssige und vernetzte Duromere teilweise gefüllt mit thermisch leitfähigen Partikeln. Die thermisch leitfähigen Partikel sind dabei nicht-metallische Partikel. Damit soll eine höhere Wärmeleitfähigkeit der Duromere erreicht werden, wobei das Duromer in die Hohlräume des Bauteils gegossen wird und im Anschluss chemisch durch Polyadaption zu einem Feststoff vernetzt wird. Dabei treten häufig mehrere Probleme auf.

Aufgrund unterschiedlicher thermischer Ausdehnungskoeffizienten können sich an den Grenzflächen Risse bilden. Aufgrund eines Volumenschrumpfs bei der chemischen Härtung kann es ebenfalls zu einer Rissbildung an Grenzflächen kommen. Bei höher viskosen Duromeren kann es zu einem Verbleib von Lufteinschlüssen und Poren kommen. Das Vergießen mit flüssigen unvernetzten Duromeren ist zum Teil ein sehr aufwändiger Prozess mit vielen Arbeitsschritten. Dabei kann es nötig sein, das Objekt vorzuwärmen, eine entsprechende Materialaufbereitung, Materialdosierung, eine Aushärtung und so weiter durchzuführen. Ein großer Nachteil bei dem Einsatz von unverflüssigten Duromeren ist die Tatsache, dass mit flüssigen unvernetzten Duromeren eine räumliche thermische Anbindung verschiedener Komponenten nur in einem sehr kleinen Maßstab erfolgen kann. Befindet sich beispielsweise innerhalb eines Gehäuses ein Wickelkopf und soll dieser Wickelkopf thermisch an das Gehäuse angebunden werden, so gelingt dies mit flüssigen unvernetzten Duromeren nur dann, wenn der Wickelkopf sehr nah, das heißt nur wenige mm vom Gehäuse entfernt, angeordnet ist. Aufgrund der rheologischen Eigenschaften der flüssigen unvernetzten Duromere kann eine thermisch Anbindung des Wickelkopfs an das Gehäuse mit Hilfe der flüssigen unvernetzten Duromeren nicht über mehrere cm erfolgen. Das heißt bei einer Wärmeanbindung, welche auf einer Vergusslösung wie zum Beispiel auf den flüssigen unvernetzten Duromeren basiert, können die räumlich ausgebildeten Wärmebrücken aufgrund ihrer rheologischen Eigenschaften nicht beliebig groß ausgestaltet werden. Die mögliche Größe der Wärmebrücken mit Vergusslösungen ist daher in vielen Fällen deutlich zu klein, sodass bei vielen Applikationen eine andere thermische Anbindung gefunden werden muss.

Das Paper "Novel Thermally Conductive Thermoplastic/Ceramic Composite Foams" aus der Zeitschrift Macromolecular Materials and Engineering, 297: 1014-1020 aus dem Jahr 2012 beschreibt multifunktionale Materialien, welche leichtgewichtig sind, thermisch leitfähig jedoch elektrisch isolierend. Dieses Paper behandelt eine neue Schaumstruktur einer Polymermatrix, welche mit keramischen Plättchen gefüllt sind. Dabei wurde eine verbesserte thermische Leitfähigkeit beobachtet.

Die Aufgabe der vorliegenden Erfindung besteht somit darin, ein Hartschaumsystem bereitzustellen, das es erlaubt, die thermische Leitfähigkeit weiter zu erhöhen bei elektrischer Isolationsfähigkeit.

Diese Aufgabe wird durch die vorliegenden unabhängigen Patentansprüche gelöst. Sinnvolle Weiterbildungen dieser Erfindung ergeben sich durch die Unteransprüche.

Die vorliegende Erfindung betrifft ein Hartschaumsystem, das einen Hartschaum aufweist und aus einem ersten Zustand in einen zweiten Zustand überführbar ist. Dabei ist der erste Zustand flüssig ausgebildet und der zweite Zustand fest ausgebildet. Das Volumen des Hartschaumsystems im zweiten Zustand ist um wenigstens 5 % größer als im ersten Zustand. Insbesondere kann das Volumen des Hartschaumsystems im zweiten Zustand gegenüber dem ersten Zustand auch größer als 20 %, 50 %, 80 % oder auch 100 % (Verdoppelung des Volumens) sein. Das Hartschaumsystem zeichnet sich dadurch aus, dass dem Hartschaumsystem zur Erhöhung der thermischen Leitfähigkeit metallische Partikel homogen als Zusatz beigemischt sind.

Dabei liegt die Konzentration der beigemischten metallischen Partikel unterhalb der Perkolationsschwelle. Bei einer Konzentration von metallischen Partikeln unterhalb der Perkolationsschwelle kann das Hartschaumsystem als elektrischer Isolator betrachtet werden, da eine sog. "statistische Leitpfadbildung" aus metallischen Partikeln nicht gegeben ist. Die Konzentration wird vorzugsweise als volumetrische Konzentration angegeben. Dabei bezieht sich die Konzentration bevorzugt auf die Perkolationsschwelle des Hartschaumsystems im zweiten Zustand. Es ist jedoch auch möglich, die Perkolationsschwelle auf den ersten Zustand des Hartschaumsystems zu beziehen. In diesem Fall kann gewährleistet werden, dass die Konzentration der Metallpartikel im zweiten Zustand auf jeden Fall unterhalb der Perkolationsschwelle liegt.

Das Hartschaumsystem weist somit den Hartschaum als eine Grundsubstanz und die metallischen Partikel als Zusatz auf. Der Hartschaum kann prinzipiell jedes Schaummaterial sein, welches die vorgenannten Anforderungen erfüllt. Vorzugsweise ist der Hartschaum als ein Zwei-Komponenten-Polyurethanschaum ausgebildet. Der Hartschaum kann auch als Polyol-Isocyanat Hartschaum ausgebildet sein. Da der erste Zustand des Hartschaums beziehungsweise Hartschaumsystems flüssig ist, kann es entsprechend einfach an zu isolierende Komponenten wie zum Beispiel einem Wickelkopf in einer elektrischen Maschine angebracht werden. Nach einem Auftragen beziehungsweise Einbringen des Hartschaumsystems auf eine zu schützende Komponente kann das Hartschaumsystem insbesondere durch Kontakt mit der Umgebungsluft oder mittels Wärmezufuhr in den zweiten Zustand versetzt werden.

Dabei dehnt sich das Volumen des Hartschaumsystems im Vergleich zum ersten Zustand um mindestens 5% aus. Dabei ist zu beachten, dass die Volumenausdehnung um 5 % sich auf das gesamte Hartschaumsystem mit den beigemischten Partikeln und nicht nur den Hartschaum an sich bezieht. Die beigemischen metallischen Partikel ändern ihr Volumen beim Übergang vom ersten in den zweiten Zustand im Vergleich zum Hartschaum nur geringfügig. Das heißt der Hartschaum für sich alleine betrachtet weist eine noch größere Volumenänderung auf als das Hartschaumsystem mit den metallischen Partikeln. Weist das Hartschaumsystem beispielsweise im ersten Zustand 80 ml Hartschaum und 20 ml Kupfer auf, so besitzt das Hartschaumsystem im zweiten Zustand ein Volumen welches mindestens 105 ml aufweist. Die Volumenänderung vom ersten Zustand in den zweiten Zustand kann jedoch deutlich mehr als 5 % sein. Insbesondere ist vorgesehen, dass das Volumen des zweiten Zustands etwa doppelt so groß ist wie das Volumen des ersten Zustands. Man kann auch sagen, dass das Hartschaumsystem durch eine Art Schäumungsvorgang vom ersten in den zweiten Zustand überführt werden kann und dabei sein Volumen deutlich vergrößert. Dabei wird in der Regel Luft in das Hartschaumsystem eingebunden. So ist es möglich, beispielsweise einen Wickelkopf innerhalb eines Gehäuses mit dem Gehäuse mechanisch zu verbinden. In diesem Fall wäre der Wickelkopf über das Hartschaumsystem mit dem Gehäuse verbunden. In dem genannten Beispiel kann durch den Hartschaum eine stoffliche thermische Anbindung des Wickelkopfs an das Gehäuse realisiert werden.

In vielen Fällen ist es gewünscht, dass bestimmte Komponenten thermisch an andere Komponenten gekoppelt sind. Dabei ist zugleich eine hohe thermische Leitfähigkeit von Vorteil. Zusätzlich kann jedoch auch zwingend erforderlich sein, dass nur eine thermische Anbindung aber keine elektrische Anbindung vorhanden sein soll. Dies bedeutet, dass das Hartschaumsystem eine möglichst hohe thermische Leitfähigkeit aufweisen soll, zusätzlich jedoch wie ein elektrischer Isolator wirken soll. Dadurch, dass dem Hartschaumsystem metallische Partikel homogen als Zusatz beigemischt sind, kann die thermische Leitfähigkeit des Hartschaums deutlich gesteigert werden. Zugleich liegt die Konzentration beziehungsweise die Menge der beigemischen metallischen Partikel unterhalb der Perkolationsschwelle. Dadurch kann sichergestellt werden, dass das Hartschaumsystem elektrisch nicht leitend ist. Das Hartschaumsystem kann somit als Isolator ausgebildet werden. Man kann auch sagen, dass das Hartschaumsystem unterperkolär ist. Damit ist insbesondere gemeint, dass das Hartschaumsystem elektrisch nicht leitend ist. So kann das Hartschaumsystem dahingehend ausgestaltet werden, dass es eine möglichst hohe thermische Leitfähigkeit aufweist und zugleich wie ein elektrischer Isolator wirkt. Das Hartschaumsystem kann daher als eine neue Art Kunststoff betrachtet werden.

Die Perkolationsschwelle ist ein Begriff aus der Perkolationstheorie. Die Perkolationstheorie beschreibt das Ausbilden von zusammenhängenden Gebieten (Clustern) beim zufallsbedingten besetzen von Strukturen. Beispiele dafür sind die Punktperkolation oder die Kantenperkolation. Bei der Punktperkolation werden insbesondere Gitterpunkte mit einer bestimmten Wahrscheinlichkeit besetzt, bei der Kantenperkolation werden insbesondere gesetzte Punkte untereinander verbunden. Mit der Perkolationstheorie können Phänomene wie zum Beispiel die elektrische Leitfähigkeit von Legierungen beschrieben werden. Allgemein lässt sich ein einfaches Modell für die Knotenperkolation konstruieren. Die Felder eines zweidimensionalen Quadratgitters werden mit einer bestimmten Wahrscheinlichkeit besetzt. Ob ein Feld besetzt wird oder leer bleibt, ist unabhängig von der Besetzung aller anderen Felder. Des Weiteren wird das Gitter als so groß angenommen, dass Randeffekte vernachlässigt werden können. In Abhängigkeit von einer gegebenen Verteilung werden sich Gruppen auf dem Gitter bilden. Diese Gruppen werden oft als Cluster bezeichnet und sind umso größer, je größer die Wahrscheinlichkeit zur Besetzung eines Feldes ist.

Die Perkolationstheorie beschäftigt sich insbesondere mit Eigenschaften wie der Größe oder der Anzahl dieser Cluster. Die Perkolationsschwelle ist als der Wert der Wahrscheinlichkeit definiert, bei der mindestens ein Cluster eine Größe erreicht, sodass es sich durch das gesamte System zum Beispiel durch das Hartschaumsystem erstreckt. Bei einem Quadratgitter zum Beispiel würde sich das Gitter von der rechten bis zur linken Seite oder von der oberen bis zur unteren Seite erstrecken. In Bezug auf die elektrische Leitfähigkeit beschreibt die Perkolationstheorie insbesondere eine so genannte statistische Leitpfadbildung. Im Bereich der Perkolationsschwelle ändert sich insbesondere die elektrische Leitfähigkeit des Hartschaumsystems schlagartig um mehrere Größenordnungen. Vereinfacht gesagt kann das Hartschaumsystem oberhalb der Perkolationsschwelle als elektrisch leitend, unterhalb der Perkolationsschwelle als elektrisch isolierend betrachtet werden.

Das Berechnen der Perkolationsschwelle für einen bestimmten Hartschaum beziehungsweise für ein bestimmtes Hartschaumsystem hängt von vielen Parametern ab und ist in der Regel zu komplex, um generelle Aussagen bezüglich des genauen Werts der Perkolationsschwelle zu machen. Jedoch ist es in der Regel möglich, einen Bereich zu identifizieren, in dem die Perkolationsschwelle liegt. Es kann insbesondere vorgesehen sein, dass die Konzentration der beigemischten metallischen Partikel auch unterhalb des Bereichs liegt, in dem die Perkolationsschwelle vermutet wird. Somit kann durch die Zugabe von metallischen Partikeln in den Hartschaum bis zur Perkolationsschwelle die thermische Leitfähigkeit des Hartschaumsystems deutlich gesteigert werden und dennoch das Hartschaumsystem unterperkolär gehalten werden. So kann ein Hartschaumsystem geschaffen oder bereitgestellt werden, was zum einen gegenüber üblichen Hartschaumlösungen eine deutlich höhere thermische Leitfähigkeit aufweist und dennoch trotz der metallischen Partikel elektrisch wie ein Isolator wirkt.

Je nach Anwendungsfall kann sich jedoch die Perkolationsschwelle auch auf den ersten Zustand des Hartschaumsystems beziehen. Dies bedeutet, dass bei bekannter Volumenausdehnung die Konzentration der beigemischten, metallischen Partikel bezüglich des ersten Zustands des Hartschaumsystems noch oberhalb der Perkolationsschwelle liegen kann. Bei der Umwandlung des Hartschaumsystems vom ersten in den zweiten Zustand dehnt sich das Hartschaumsystem aus. Dadurch sinkt entsprechend die Konzentration, insbesondere die Volumenkonzentration, der beigemischten metallischen Partikel. Nach der Volumenausdehnung liegt dann die volumetrische Konzentration der beigemischten metallischen Partikel im Hartschaumsystem des zweiten Zustands unterhalb der Perkolationsschwelle. Die Konzentration der beigemischten metallischen Partikel wird also stets so gewählt, dass zumindest im Hartschaumsystem des zweiten Zustands die Perkolationsschwelle nicht überschritten wird. Liegt das Hartschaumsystem im ersten Zustand also flüssig vor, so kann gegebenenfalls die Konzentration der beigemischten metallischen Partikel oberhalb der Perkolationsschwelle bezüglich des Hartschaumsystems im ersten Zustand sein. Durch die Zugabe metallischer Partikel kann die thermische Leitfähigkeit des Hartschaums weiter gesteigert werden. Zugleich wird durch die Begrenzung der Konzentration der beigemischten metallischen Partikel bewirkt, dass das Hartschaumsystem im zweiten Zustand elektrisch isolierend bleibt.

In Bezug auf die metallischen Partikel kann das Hartschaumsystem im zweiten Zustand auch als unterperkolär bezeichnet werden. Dies bedeutet, dass im zweiten Zustand des Hartschaumsystems sich keine zusammenhängende Gebiete von metallischen Partikeln ergeben können. Somit ist gewährleistet, dass das Hartschaumsystem trotz der beigemischten metallischen Partikel wie ein Isolator wirkt. Jedoch kann vorteilhaft die thermische Leitfähigkeit des Hartschaumsystems dadurch erhöht werden.

Ein solches Hartschaumsystem ist insbesondere für den Einsatz bei elektrischen Maschinen vorteilhaft. Bei elektrischen Maschinen ist es häufig erwünscht, dass bestimmte Komponenten wie zum Beispiel ein Stator mit anderen Komponenten wie zum Beispiel einem Gehäuse thermisch verbunden sind, jedoch ein Stromfluss (Kurzschluss) zwischen diesen Komponenten unterbunden wird. Dies kann mit dem erfindungsgemäßen Hartschaumsystem gelingen. Zugleich kann ein solches Hartschaumsystem deutlich größere Distanzen überwinden als derzeit übliche Duromer-Systeme. Da diese Duromer-Systeme eine deutlich geringere Volumenausdehnung als das erfindungsgemäße Hartschaumsystem aufweisen, kann das Hartschaumsystem auch dann zum Einsatz kommen, wenn Duromere scheitern.

Eine weitere Ausführungsform der vorliegenden Erfindung sieht ein Hartschaumsystem vor, wobei ausschließlich metallische Partikel als Zusatz beigemischt sind. Die metallischen Partikel können beispielsweise als Kupfer, Aluminium, Eisen, Niob oder Gold ausgebildet sein. Bevorzugt werden Metalle mit einer möglichst hohen Wärmeleitfähigkeit eingesetzt. Daher ist das Metall Kupfer (λ ∼ 400 W/(m K)) ein gutes Material, um die Wärmeleitfähigkeit des Hartschaumsystems zu steigern. Es können unterschiedliche metallische Partikel als Zusatz beigemischt sein. Jedoch enthalten die zugesetzten Partikel in dieser Variante der Erfindung keine nicht-metallischen Partikel.

Eine weitere Variante der vorliegenden Erfindung sieht ein Hartschaumsystem vor, wobei der Hartschaum als Ein-Komponenten-Hartschaum oder Zwei-Komponenten-Hartschaum ausgebildet ist. Ein Ein-Komponenten-Hartschaum ist vorzugsweise luftdicht verpackt. Dies kann beispielsweise eine Tube oder Spraydose sein. Wird der Hartschaum aus der Tube oder der Spraydose entnommen beziehungsweise herausgesprüht, so ist der Ein-Komponenten-Hartschaum zunächst flüssig. In diesem Zustand kann der Ein-Komponenten-Hartschaum leichter verarbeitet werden. Da der Ein-Komponenten-Hartschaum nach der Entnahme aus der Tube oder der Spraydose üblicherweise Kontakt mit der Umgebungsluft hat, kann je nach Hartschaum ein so genannter Schäumungsprozess stattfinden. Das heißt der Ein-Komponenten-Hartschaum reagiert chemisch mit der Luft und beginnt sich in den zweiten festen Zustand umzuwandeln. Bei dieser Umwandlung dehnt sich der Ein-Komponenten-Hartschaum aus. Dieser dargestellte Schäumungsprozess kann je nach Hartschaum bereits bei normalen Raumtemperaturen einsetzen.

Der Zwei-Komponenten-Hartschaum hingegen wird aus zwei unterschiedlichen stofflichen Komponenten hergestellt. Erst wenn diese beiden Komponenten entsprechend zusammengeführt werden, bildet sich der Hartschaum bzw. das Hartschaumsystem im ersten Zustand aus. Die Umwandlung in den zweiten Zustand kann analog wie bei dem Ein-Komponenten-Hartschaum erfolgen. Oft werden zur Herstellung des Zwei-Komponenten-Hartschaums die zwei unterschiedlichen stofflichen Komponenten in einem Mischrohr vermischt. Ein Ein-Komponenten-Hartschaum kann insbesondere feuchtigkeitshärtend sein. Das heißt ein derartiger Ein-Komponenten-Hartschaum entzieht der Umgebungsluft Feuchtigkeit und härtet so chemisch. Das heißt durch den Kontakt mit der Umgebungsfeuchte transformiert sich der Ein-Komponenten-Hartschaum vom ersten in den zweiten Zustand. Eine andere Art von Zwei-Komponenten-Hartschaum benötigt insbesondere keine Feuchtigkeit, um auszuhärten. In der Regel ist eine der beiden Komponenten des Hartschaums beim Zwei-Komponenten-Hartschaum als Härter ausgebildet. Meistens härtet der Zwei-Komponenten-Hartschaum schneller aus als der Ein-Komponenten-Hartschaum. Je nach Anwendungsfall kann der Ein-Komponenten-Hartschaum oder der Zwei-Komponenten-Hartschaum zum Einsatz kommen. Das Hartschaumsystem kann auch als ein Mehr-Komponenten-Hartschaum mit mehr als zwei Komponenten ausgebildet sein. In diesem Fall werden mehr als zwei, zum Beispiel drei Komponenten, benutzt, um das Hartschaumsystem zu bilden.

Eine weitere Variante der vorliegenden Erfindung sieht vor, dass der Hartschaum als Zwei-Komponenten-Polyol-Isocyanat Hartschaum ausgebildet ist. Ein Zwei-Komponenten-Polyol-Isocyanat Hartschaum ist ein handelsüblicher Hartschaum, der hinreichend gut zu dem Hartschaumsystem verarbeitet werden kann.

Eine weitere Variante der vorliegenden Erfindung sieht vor, dass der Hartschaum im ersten Zustand bei Kontakt mit Umgebungsluft bei einer Raumtemperatur, die insbesondere innerhalb des Intervalls von 15°C bis 25°C liegt, sich von dem ersten Zustand in den zweiten Zustand transformiert. Mit anderen Worten beschreibt diese Variante der Erfindung einen Hartschaum, welcher bereits bei normalen Raumtemperaturen aushärtet. Aushärten bedeutet in diesem Fall, der Übergang von dem ersten Zustand in den zweiten Zustand. Dies kann beispielsweise durch eine chemische Reaktion des Hartschaums mit der Umgebungsluft oder der Umgebungsfeuchte erfolgen. Im Gegensatz zu Hartschaumlösungen, welche eine thermische Aushärtung benötigen, muss in dieser Variante der Erfindung keine zusätzliche thermische Energie zugeführt werden, um den Hartschaum von dem ersten Zustand in den zweiten Zustand zu überführen.

Eine weitere Variante der vorliegenden Erfindung sieht vor, dass der Hartschaum sich nur bei Temperaturen deutlich oberhalb der Raumtemperatur, insbesondere bei Temperaturen über 100 °C, von dem ersten Zustand in den zweiten Zustand transformiert. Im Gegensatz zu Hartschäumen, welche bereits bei Raumtemperaturen aushärten, kann bei diesen Hartschäumen die Transformation in den zweiten Zustand kontrolliert gesteuert werden. Da Raumtemperaturen normalerweise deutlich unter 100°C liegen, ist ein versehentliches Aushärten des Hartschaums, also ein unerwünschter Übergang vom ersten Zustand in den zweiten Zustand, so gut wie ausgeschlossen. Die Transformation des Hartschaumsystems beziehungsweise des Hartschaums erfolgt in dieser Variante nur dann, wenn ihm entsprechend ausreichend thermische Energie zugeführt wird, sodass die erforderliche Aushärtetemperatur erreicht wird. Benötigt beispielsweise ein Hartschaum mindestens 150°C, um sich von dem ersten Zustand in den zweiten Zustand zu transformieren, so kann dieser Hartschaum sich nicht plötzlich bei 20°C transformieren. Bei einer Umgebungstemperatur von 20°C würde dieser Hartschaum stets im ersten Zustand verbleiben. Das heißt der Zeitpunkt des Aushärtens kann so kontrolliert gesteuert werden. Dies kann dann hilfreich sein, wenn beispielsweise bei der Applikation des entsprechenden Hartschaums mehr Zeit notwendig ist. In diesem Fall würde zunächst der Hartschaum im ersten Zustand den Anforderungen entsprechend eingesetzt werden und erst anschließend könnte man durch Zugabe thermischer Energie die Umwandlung in den zweiten Zustand induzieren. Das heißt der Prozess des Aushärtens beziehungsweise der Transformation des Hartschaumsystems vom ersten Zustand in den zweiten Zustand kann bewusst erst dann erfolgen, wenn das Hartschaumsystem entsprechend an den Komponenten angebracht wurde.

Eine weitere Variante der vorliegenden Erfindung sieht vor, dass die beigemischten metallischen Partikel faserförmig ausgebildet sind. Das Hartschaumsystem weist im zweiten Zustand insbesondere viele Lufteinschlüsse beziehungsweise Poren auf. Diese Luft ist in den Poren des Hartschaumsystems eingeschlossen und wirkt wie ein thermischer Isolator, was im Hinblick auf die thermische Leitfähigkeit für diese Erfindung nachteilig ist. Die beigemischten faserförmigen metallischen Partikel können jedoch diese Poren effektiv thermisch überbrücken. Das heißt die metallischen Partikel können insbesondere stäbchenförmig sein, um die Wärme um die Lufteinschlüsse herum abzuleiten. Die faserförmigen metallischen Partikel können gerade Stäbchen sein oder als gekrümmte Fasern ausgebildet sein. Erfahrungsgemäß ordnen sich die metallischen faserförmigen Partikel während des Übergangs vom ersten in den zweiten Zustand an den Poren an. Vorzugsweise werden für die faserförmigen metallischen Partikel Kupferfasern eingesetzt. Ordnen sich diese Kupferfasern bei einem Schäumungsprozess, also beim Übergang von dem ersten in den zweiten Zustand, an den Poren an, so kann Wärme effektiv um die Poren herum geführt und abgeleitet werden.

In einer weiteren Variante der vorliegenden Erfindung ist vorgesehen, dass die faserförmigen metallischen Partikel jeweils eine erste Ausdehnung und eine zweite Ausdehnung aufweisen, wobei die zweite Ausdehnung die erste Ausdehnung um mindestens einen Faktor 10, bevorzugt Faktor 100, übersteigt. Die faserförmigen metallischen Partikel, insbesondere Kupferfasern, können beispielsweise eine Länge von etwa 0,5 mm und eine Dicke von etwa 50µm aufweisen. Das heißt die faserförmigen metallischen Partikel haben eine Länge, die deutlich größer als der Durchmesser ist. Idealerweise werden diese beiden Ausdehnungen derart gewählt, sodass die Perkolationsschwelle dadurch nicht unnötig abgesenkt wird. Da die Perkolationsschwelle auch von der Geometrie der eingebrachten metallischen Partikel abhängig ist, werden jene Geometrien bevorzugt eingesetzt, welche die Perkolationsschwelle nicht zusätzlich reduzieren. Bei kugelförmigen Kupferpartikeln mit einem Durchmesser von 1 µm beträgt die Perkolationsschwelle in etwa 30 Vol.-% des Hartschaumsystems im ersten Zustand. Der exakte Wert der Perkolationsschwelle hängt von vielen Faktoren ab und kann daher nicht exakt angegeben werden. Beispielsweise beeinflusst das Schäumungsverhalten, die Art des Hartschaums, eine eventuelle Hauptschäumungsrichtung, die Geometrie der eingebrachten metallischen Partikel und so weiter den Wert der Perkolationsschwelle. Faserförmige Kupferpartikel haben sich als sehr effektive Wärmebrücken herausgestellt und kommen im Rahmen dieser Erfindung bevorzugt zum Einsatz.

Eine weitere Variante der vorliegenden Erfindung sieht vor, dass dem Hartschaum zusätzlich zu den metallischen Partikeln weitere nicht-metallische Partikel zur Verbesserung der thermischen Leitfähigkeit beigemischt sind. Dabei sind insbesondere feste Partikel angesprochen. Luft wird im Rahmen dieser Erfindung nicht Stoff betrachtet, der dem Hartschaumsystem beigemischt wird. Die Zugabe von nicht-metallische Partikeln kann die thermische Leitfähigkeit des Hartschaumsystems weiter erhöhen. Da der Zugabe oder Beimischung von metallischen Partikeln aufgrund der Perkolationsschwelle Grenzen gesetzt sind, dies jedoch nicht für die nicht-metallische Partikel gilt, kann in dieser Variante der Erfindung die thermische Leitfähigkeit noch weiter gesteigert werden. Insbesondere kann dadurch bei faserförmigen metallischen Partikeln eine Art Wärmeübergang zwischen den verschiedenen metallischen Fasern erfolgen. Da die metallischen Fasern statistisch gesehen sich nicht berühren dürfen, da ansonsten das Hartschaumsystem elektrisch leitend wäre, ist zwischen den metallischen Fasern der Wärmeübergang reduziert. Die in dieser Variante der Erfindung zugesetzten nicht-metallischen Partikeln können einen Wärmeübergang zwischen den jeweiligen metallischen Fasern bilden. Dies bedeutet, dass unterschiedliche metallische Fasern mit Hilfe der nicht-metallischen Partikel thermisch gekoppelt werden können. Zugleich sind sie elektrisch nicht miteinander verbunden, weil die thermische Kopplung durch die nicht-metallischen Partikel realisiert wird. Damit kann ein Konzept bereitgestellt werden, dass es ermöglicht, ein Hartschaumsystem bereitzustellen, welches das erfindungsgemäße Hartschaumsystem nach Anspruch 1 noch weiter hinsichtlich der thermischen Leitfähigkeit verbessert.

In einer weiteren Variante der vorliegenden Erfindung ist vorgesehen, dass die nicht metallischen Partikel aus Bornitrid ausgebildet sind. Bornitrid ist elektrisch isolierend, weist jedoch dennoch eine Wärmeleitfähigkeit auf, welche zwar geringer ist als bei Kupfer, jedoch im Bereich von anderen Metallen liegt. Die Wärmeleitfähigkeit bei Bornitrid ist in der Regel anisotrop und von der jeweiligen Struktur des Bornitrids abhängig. Hexagonales Bornitrid weist beispielsweise in etwa eine thermische Leitfähigkeit von 300 W/(m K) auf.

Eine weitere Ausführungsform dieser Erfindung sieht vor, dass die metallischen Bornitrid Partikel als Plättchen ausgebildet sind. Diese Plättchen haben vorzugsweise eine ellipsenförmige Grundfläche sowie eine Dicke von circa 50 µm. Bornitrid in Plättchenform ist einfach zu beschaffen und auch einfach zu verarbeiten. Die Abmessungen der Bornitrid Plättchen können dabei mit der sich in dem Hartschaumsystem ergebenden Struktur abgestimmt werden. Dies bedeutet beispielsweise, dass bei größeren Porenabständen innerhalb des Hartschaumsystems tendenziell bevorzugt längliche Bornitrid Partikel zum Einsatz kommen würden.

Eine weitere Variante dieser Erfindung sieht vor, dass die beigemischten Partikel faserförmig, kugelförmig, plattenförmig oder als Mischung derselben ausgebildet sind. Die jeweilige Geometrie der beigemischten Partikel kann die thermische Leitfähigkeit des Hartschaumsystems beeinflussen. Zugleich wird durch die jeweilige Geometrie der beigemischten Partikel ein so genannter Formfaktor, welcher bei unregelmäßig geformten Partikeln in der Regel einen äquivalenten Durchmesser zur Charakterisierung der Ausdehnung der beigemischten Partikel angibt, gebildet. Dies bedeutet insbesondere, dass bei unterschiedlich geformten beigemischten Partikeln ein repräsentativer Durchmesser für die Größe aller unterschiedlichen beigemischten Partikel angegeben werden kann. Gasförmige Partikel bleiben bei dieser Betrachtung idealerweise außen vor. Die Beimischung von Partikeln, welche geometrisch unterschiedlich sind, kann auch einen Einfluss auf die Perkolationsschwelle haben. Bei kugelförmigen Kupferpartikeln mit einem Durchmesser von etwa 1µm liegt die Perkolationsschwelle bei in etwa 30 Vol.-%. Bei Carbon-Nanotubes, welche eine längliche zylinderförmige Ausdehnung aufweisen, ist die Perkolationsschwelle im Vergleich dazu deutlich niedriger. Sie liegt in diesem Fall in etwa bei 1 Vol.-%. Im Idealfall kann durch Zugabe von festen Partikeln, welche eine andere Geometrie aufweisen, die thermische Leitfähigkeit weiter erhöht werden, wobei die Perkolationsschwelle dennoch nicht überschritten wird. Dies gilt insbesondere für metallische Partikel.

Grundsätzlich kann folgende Variante ebenfalls vom Prinzip von dieser Erfindung als erfasst angesehen werden. Sie sieht vor, dass die metallischen Partikel jeweils von nicht-metallischen Partikeln umschlossen sind. Damit wäre sichergestellt, dass sich im Hartschaumsystem keine elektrische Leitfähigkeit ausbilden kann. Vorzugsweise weisen die metallischen Partikel Kupfer auf und die nicht-metallischen Partikel Bornitrid. In dieser besonderen Variante der Erfindung muss hinsichtlich der Konzentration der metallischen Partikel ausnahmsweise keine Rücksicht auf die Perkolationsschwelle genommen werden. Da in dieser Variante der Erfindung alle metallischen Partikel jeweils vollständig von nicht-metallischen Partikeln umschlossen sind, können die metallischen Partikel sich nicht zu einem Leitpfad innerhalb des Hartschaumsystems anordnen.

In vielen Fällen kann jedoch die Zugabe von Partikel aufgrund der verändernden rheologischen Eigenschaften nicht beliebig gesteigert werden. Der Hartschaum wird mit zunehmender Zugabe metallischer beziehungsweise nicht-metallischer Partikel tendenziell zäher. Das heißt, die Viskosität des Hartschaums beziehungsweise des Hartschaumsystems im ersten Zustand nimmt tendenziell mit steigender Konzentration beigemischter Partikel zu. Dies kann das Vermischen der Partikel mit dem Hartschaum beziehungsweise die weitere Verarbeitung beeinträchtigen.

In dieser besonderen Variante der Erfindung ist jedoch darauf zu achten, dass das Umschließen der metallischen Partikel durch die nicht-metallischen Partikel zuverlässig gegeben ist. Wird beispielsweise Kupfer von Bornitrid umgeben, so könnte ein eventuelles Abplatzen von Bornitridpartikeln im späteren Verlauf problematisch werden. Wäre die Konzentration der metallischen Partikel höher als die der Perkolationsschwelle, so könnte das Hartschaumsystem durch beschädigte Bornitridpartikel elektrisch leitend werden. Das Hartschaumsystem wäre demnach nicht länger elektrisch isolierend, was in dieser Erfindung nicht erwünscht ist. Aus diesem Grund kann es vorteilhaft sein, die Konzentration der beigemischten metallischen Partikel stets unterhalb der Perkolationsschwelle zu halten.

Diese Erfindung stellt auch ein Verfahren zur Herstellung eines elektrisch isolierenden Hartschaumsystems mit verbesserter thermischer Leitfähigkeit bereit. Dazu werden zunächst eine oder mehrere Komponenten zur Herstellung eines Hartschaums bereitgestellt. Dabei ist nach einer Umwandlung der einen oder mehreren Komponenten in den Hartschaum dieser in einem ersten Zustand flüssig und vom diesem ersten Zustand in einen festen zweiten Zustand überführbar. Dabei ist das Volumen des Hartschaums beziehungsweise des Hartschaumsystems im zweiten Zustand um wenigstens 5 % größer als das Volumen im ersten Zustand.

In einem weiteren Schritt b) werden metallische Partikel zu der einen Komponente oder der mehreren Komponenten homogen beigemischt. Durch dieses Beimischen von metallischen Partikel wird das Hartschaumsystem erzeugt. D.h. der Hartschaum beinhaltet keine zugesetzten Partikel, das Hartschaumsystem weist zugesetzte Partikel auf, die insbesondere fest sind. Das Beimischen kann beispielsweise durch den Einsatz eines entsprechenden Mischrohres geschehen. Dabei ist eine Konzentration der metallischen Partikel niedriger als die Perkolationsschwelle. Die Konzentration der metallischen Partikel überschreitet nicht die Perkolationsschwelle, sodass das Hartschaumsystem im zweiten Zustand nicht elektrisch leitend wird. Die Perkolationsschwelle bezieht sich somit auf die Konzentration der metallischen Partikel, welche dem Hartschaumsystem beigemischt werden. Die Perkolationsschwelle gibt insbesondere an, ab welcher Konzentration der metallischen Partikel das Hartschaumsystem elektrisch leitend wird. In der Regel ist dieser Übergang abrupt und schlagartig. Beim Überschreiten der Perkolationsschwelle liegt meistens eine Gitterstruktur beziehungsweise ein Cluster der metallischen Partikel vor, wobei diese Cluster-Struktur von Metallpartikeln den ganzen Hartschaum durchziehen kann. Anschaulich gesagt bedeutet dies, dass sich die metallischen Partikel ab der Perkolationsschwelle derart anordnen können, sodass statistisch gesehen ein elektrischer Leitpfad aus metallischen Partikeln durch das komplette Hartschaumsystem gebildet werden kann. Bei Konzentrationen der metallischen Partikel größer als die Perkolationsschwelle steigt die Wahrscheinlichkeit bezüglich der Bildung eines Metall-Clusters, der das Hartschaumsystem durchziehen kann, schlagartig an.

Die vorliegende Erfindung stellt auch ein Verfahren bereit, wobei der einen Komponente oder den mehreren Komponenten vor der Umwandlung zu dem Hartschaum im ersten Zustand zusätzlich zur Erhöhung der thermischen Leitfähigkeit nicht-metallische Partikel, insbesondere Bornitrid, homogen beigemischt werden. Durch die zusätzliche Beimischung von nicht-metallischen Partikeln, insbesondere Bornitrid, kann die thermische Leitfähigkeit des Hartschaumsystems noch weiter gesteigert werden. Dies kann nicht immer durch die Zugabe weiterer metallischer Partikel erfolgen, da vorgesehen ist, dass das Hartschaumsystem elektrisch isolierend bleibt. Damit muss die Konzentration der metallischen Partikel zumindest in dem zweiten Zustand des Hartschaumsystems unterhalb der Perkolationsschwelle bleiben. Ist die Konzentration der metallischen Partikel bereits im ersten Zustand unterhalb der Perkolationsschwelle, so liegt die Konzentration der metallischen Partikel im zweiten Zustand aufgrund der Ausdehnung des Hartschaums automatisch darunter. Eine weitere Zugabe von metallischen Partikeln jenseits der Perkolationsschwelle würde bedeuten, dass das Hartschaumsystems schlagartig elektrisch leitend werden kann, was dem Sinn dieser Erfindung zuwider läuft. Jedoch kann in diesem Fall durch die Zugabe weiterer nicht-metallischer Partikel die thermische Leitfähigkeit weiter erhöht werden. Das Hartschaumsystem bleibt aufgrund der Natur der nicht-metallischen Partikel als Isolator weiterhin elektrisch isolierend.

Die vorliegende Erfindung wird nun anhand der beigefügten Zeichnungen näher erläutert. Darin zeigen:
- FIG 1: ein beispielhafter Wickelkopf eines Elektromotors, welcher mit einer Vergussmasse versehen ist;
- FIG 2: eine beispielhafte Darstellung eines Hartschaumsystems mit einer zusätzlichen vergrößerten Darstellung eines Bereichs um einer zufällig ausgewählten Pore des Hartschaumsystems;
- FIG 3: ein Diagramm, welches Ergebnisse zur thermischen Leitfähigkeit beziehungsweise zu einem Expansionsfaktor angibt bei einem Hartschaumsystem mit 20 Vol.-% Kupfer;
- FIG 4: ein Diagramm mit Messerergebnissen hinsichtlich der Wärmeleitfähigkeit und des Expansionsfaktors bei einem PU-Schaum-System, der einen Füllgrad von 25 Vol.-% aufweist.

Bei den im Folgenden erläuterten Ausführungsbeispielen handelt es sich um bevorzugte Ausführungsformen der Erfindung. Bei den Ausführungs-beispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

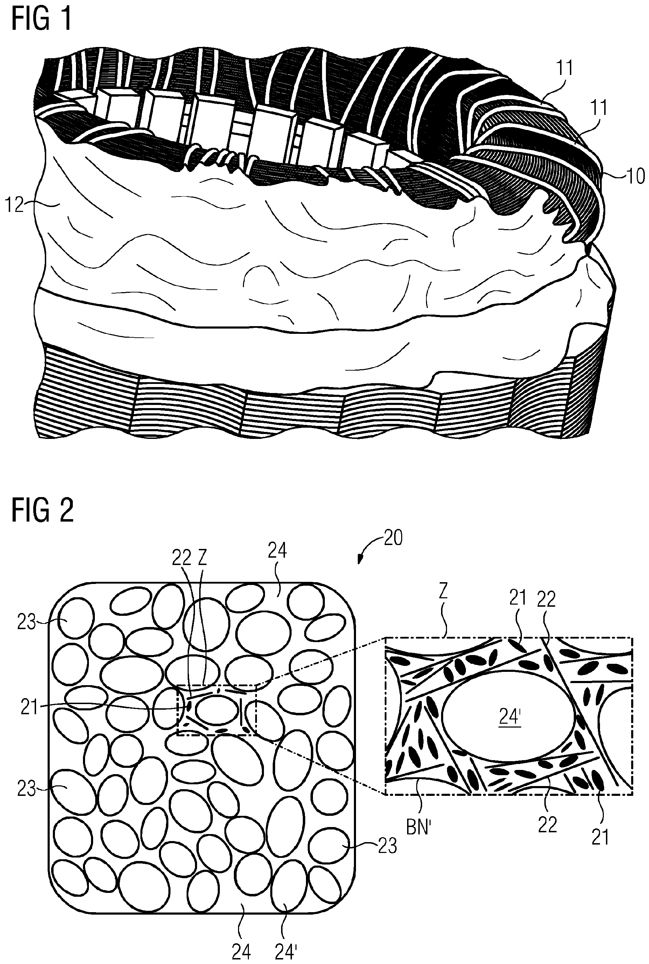

FIG 1 zeigt kein Hartschaumsystem 20, sondern einen Wickelkopf 10, der mit einer Vergussmasse 12 überzogen ist. Die Vergussmasse 12 ist oft von der Konsistenz her ähnlich wie ein Nagellack. Im Vergleich zu einem Hartschaumsystem 20 kann die Vergussmasse 12 den Wickelkopf 10 nur bedingt mit weiteren Komponenten einer elektrischen Maschine thermisch koppeln. Der Wickelkopf 10 in FIG 1 ist zusätzlich mit mehreren Bandagen 11 mechanisch fixiert. Zwar härtet die Vergussmasse 12 aus, dennoch kann sie keine so hohe mechanisch Stabilität wie das Hartschaumsystem 20 bereitstellen. Wenn beispielsweise um den Wickelkopf 10 herum in einem Abstand von etwa 5 cm ein Gehäuse angeordnet wäre, so könnte man mit der Vergussmasse 12 keinen Kontakt zwischen dem Wickelkopf 10 und dem darum angeordneten Gehäuse herstellen. Dies wäre aufgrund der rheologischen Eigenschaften der Vergussmasse 12 nicht oder nur mit sehr hohem zusätzlichem Aufwand möglich.

Die Vergussmasse 12 müsste aufwändig zwischen dem Wickelkopf 10 und dem Gehäuse gehalten werden, bis sie aushärtet. Dies wäre eventuell theoretisch möglich, jedoch zum einen mit einem sehr hohen Aufwand verbunden und zum anderen wäre es fraglich, wie stabil eine so geschaffene mechanische Verbindung in Form der Vergussmasse 12 sein würde. Bei mechanischen Vibrationen könnte die Gefahr drohen, dass die Vergussmasse 12, welche in diesem Beispiel einen Hohlraum von etwa 5 cm überbrücken müsste, einfach abbrechen könnte. Dies zeigt deutlich, dass der Einsatz der Vergussmasse 12 zur Verbesserung der thermischen Leitfähigkeit in der Praxis Grenzen gesetzt sind.

Der Einsatz der Vergussmasse 12 wird in der Regel deshalb vorgesehen, weil der Wickelkopf 10 sich im Einsatz erwärmen kann. Bei elektrischen Maschinen wie beispielsweise einem Generator, der den Wickelkopf 10 beinhaltet, kann sich der Wickelkopf 10 entsprechend erwärmen. Die Erwärmung des Wickelkopfs 10 soll idealerweise auf ein bestimmtes Maß begrenzt werden. Das heißt es ist gewünscht, eine verbesserte Wärmeabfuhr im Bereich des Wickelkopfs 10 bereitzustellen. Zwar vermag die Vergussmasse 12 eine Abwärme des Wickelkopfs 10 aus dem Wickelkopf 10 herauszuleiten, jedoch kann so die Abwärme nicht weiter zu anderen Komponenten geleitet werden, vor allem wenn diese nicht unmittelbar in direkter Umgebung des Wickelkopfs 10 angeordnet sind. Eine Wärmeabfuhr beziehungsweise Entwärmung des Wickelkopfs 10 mit Hilfe der Vergussmasse 12 in der Art, dass die Abwärme des Wickelkopfs 10 auf ein Gehäuse übertragen wird, kann in der Regel nicht ohne Weiteres erfolgen. Dies wäre aus nachvollziehbaren Gründen nur dann möglich, wenn das Gehäuse um den Wickelkopf 10 nur wenige mm davon entfernt angeordnet ist. In der Regel sollte das Gehäuse nur 1 bis 2 mm vom Wickelkopf entfernt sein, sofern eine Wärmeabfuhr mit der Vergussmasse 12 erwünscht ist. Bei größeren Abständen kann eine zuverlässige Wärmeabfuhr mit Hilfe der Vergussmasse 12 nicht mehr erreicht werden.

FIG 2 zeigt beispielhaft das Hartschaumsystem 20 sowie einen vergrößerten Ausschnitt Z. Der Ausschnitt Z stellt beispielhaft den Bereich um eine zufällig ausgewählte Pore 24' dar. In FIG 2 weist das Hartschaumsystem 20 folgende Komponenten auf: einen Hartschaum 24, mehrere Poren 24' beziehungsweise Lufteinschlüsse, plättchenförmige nicht-metallische Partikel 21 sowie faserförmige metallische Partikel 22. In FIG 2 liegt das Hartschaumsystem 20 im festen zweiten Zustand vor. Im ersten Zustand wäre das Hartschaumsystem 20 flüssig und würde keine oder nur sehr wenige Poren 24' beinhalten. Durch die Überführung von dem ersten Zustand in den zweiten Zustand dehnt sich das Hartschaumsystem 20 entsprechend aus. Dies geschieht vornehmlich durch eine Art Schäumungsprozess, der in der Regel bei Kontakt mit der Umgebungsluft stattfindet. Das heißt der Hartschaum 24 reagiert mit der Umgebungsluft beziehungsweise mit der Umgebungsfeuchte und bildet im Inneren mehrere Poren 24' aus. Durch die Bildung der Poren 24' dehnt sich der Hartschaum 24 aus und vergrößert so entsprechend sein Volumen.

Die Umwandlung des Hartschaumsystems 20 vom ersten in den zweiten Zustand findet vorzugsweise bei Raumtemperaturen statt. Dies sind insbesondere Temperaturen im Bereich von 20 bis 25°C. Jedoch kann es auch vorgesehen beziehungsweise sinnvoll sein, dass der Hartschaum 24 erst bei deutlich höheren Temperaturen, beispielsweise bei Temperaturen über 100°C in den zweiten Zustand überführbar ist. In diesem Fall könnte der flüssige (erste Zustand) Hartschaum 24 zunächst in aller Ruhe um den Wickelkopf 10 angebracht werden. Eine rasche Verarbeitung wäre bei einem thermisch aushärtenden Hartschaumsystem 20 nicht zwingend notwendig. Ist der flüssige Hartschaum 24 entsprechend an allen thermisch zu koppelnden Komponenten angebracht, kann der Aushärtungsprozess durch Zuführung thermischer Energie bewusst aktiviert werden. Somit hat das Hartschaumsystem 20, welches bei Umgebungstemperatur aushärtet, den Vorteil, dass kein zusätzlicher Energieaufwand nötig ist. Ein thermisch aushärtender Hartschaum 24 hingegeben bietet den Vorteil, dass der Zeitpunkt des Aushärtens beziehungsweise der Zeitpunkt wann der Hartschaum 24 vom ersten in den zweiten Zustand überführt werden soll, bewusst gesteuert werden kann.

Im Ausschnitt Z ist beispielhaft die Pore 24' mit den darum angeordneten Partikeln 21 und 22 gezeigt. Die metallischen Partikel 22 sind in diesem Beispiel faserförmig ausgebildet und weisen Kupfer auf. Die nicht-metallischen Partikel 21 sind plättchenförmig und weisen Bornitrid auf. Bei ungefüllten Schäumen, also einem Hartschaumsystem ohne die zugesetzten metallischen und nicht-metallischen Partikel 22 und 21, wäre das Hartschaumsystem 20 tendenziell thermisch isolierend. Die Wärmeleitfähigkeit des Hartschaumsystems 20 ohne zugesetzte Partikel liegt im Bereich von etwa 0,03 W/(m K). Dies liegt insbesondere an der Vielzahl von Poren 24', die durch den Schäumungs- und Expansionsprozess im Material entstehen. Durch die in diesem Beispiel eingebrachten Kupfer- beziehungsweise Bornitridpartikel erhöht sich jedoch die Wärmeleitfähigkeit, da sich die Partikel vorzugsweise an den Porenwänden anreichern. Somit kann durch die Kupfer- beziehungsweise Bornitridpartikel die thermische Leitfähigkeit des Hartschaumsystems 20 deutlich gesteigert werden.

Die faserförmigen Kupferstäbchen in FIG 2 (metallische Partikel 22) fungieren quasi als Wärmebrücken, welche eine Abwärme um die Pore 24' herum leiten können. Die Kupferfasern jedoch bilden für sich alleine keine verbundene Wärmebrücke. Zwar kann es sein, dass vereinzelt wenige Kupferfasern sich berühren, jedoch sind die Kupferfasern statistisch gesehen voneinander getrennt, da die Konzentration der Kupferfasern unterhalb der Perkolationsschwelle des Hartschaumsystems 20 im zweiten Zustand ist. Dies bedeutet, dass zwischen den jeweiligen Kupferfasern zunächst der Hartschaum 24 als thermischer Isolator vorliegt. Um nun die thermische Leitfähigkeit dennoch weiter zu erhöhen, sind in FIG 2 nicht-metallische Partikel 21 in Form von Bornitrid-Plättchen zugesetzt. Diese Bornitrid-Plättchen können voneinander getrennte Kupferfasern thermisch miteinander verbinden. Das heißt die jeweiligen Kupferfasern können somit thermisch miteinander verbunden werden, wobei sie nicht elektrisch miteinander verbunden sind.

Ein Ausschnitt BN' in FIG 2 zeigt beispielhaft, wie ein Bornitrid-Plättchen an zwei Kupferfasern anliegt. Thermische Energie kann somit von einer Kupferfaser über das Bornitrid-Plättchen zu der nächsten Kupferfaser gelangen. Dies zeigt, dass eine geschickte Mischung aus Kupferfasern und Bornitrid-Plättchen die thermische Leitfähigkeit des Hartschaumsystems 20 optimieren kann, sodass eine Wärmeleitfähigkeit von bis zu 1,15 W/(m K) im geschäumten System entstehen kann. Dabei ist bei allen Mischungen die elektrische Leitfähigkeit des Hartschaumsystems im zweiten Zustand 0, weil die Konzentration der zugesetzten Kupferfasern unterhalb der jeweiligen Perkolationsschwelle liegt. Man kann sagen, dass das Hartschaumsystem 20 im zweiten Zustand unterperkolär ist. Damit ist gemeint, dass das Hartschaumsystem 20 elektrisch isolierend ist, also wie ein elektrischer Isolator fungiert. Jedoch ist die thermische Leitfähigkeit aufgrund der geschickten Beimischung von Kupferfasern und Bornitrid-Plättchen dennoch erhöht. Mit diesem Hartschaumsystem 20 ist es also möglich, Komponenten einer elektrischen Maschine mechanisch zu verfestigen, elektrisch zu isolieren und zeitgleich eine gewisse thermische Entwärmung zu gewährleisten, die in der Größenordnung gefüllter Vergusssysteme liegt.

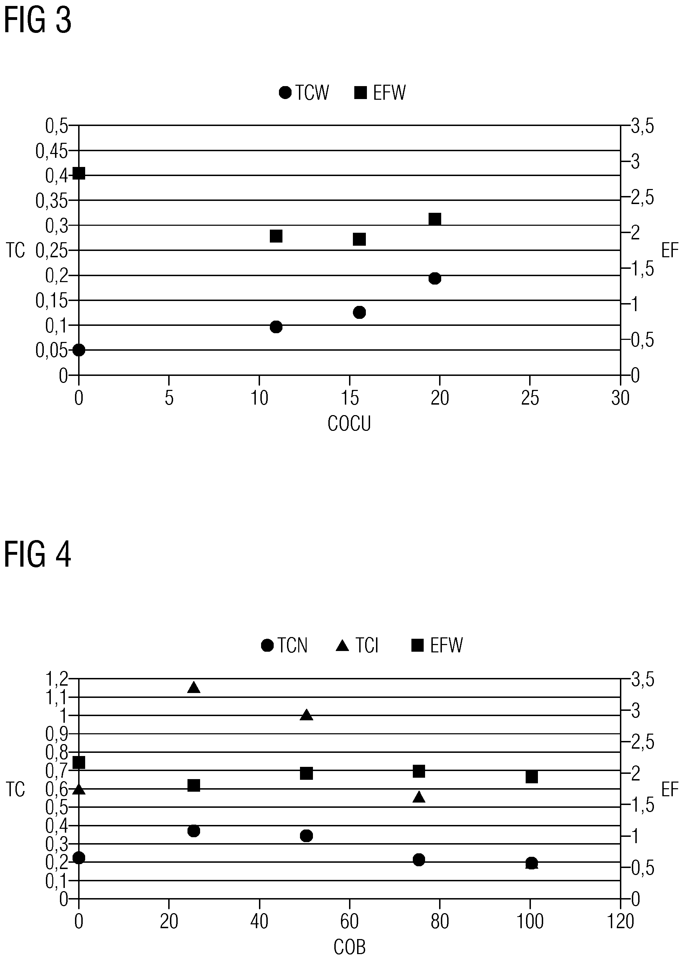

In FIG 3 sind beispielhaft einige Messergebnisse des Hartschaumsystems 20 gezeigt, dem 20 Vol.-% Kupfer beigemischt wurde. Die 20 Vol.-% sowie alle weiteren Volumenprozentangaben beziehen sich auf das Hartschaumsystem 20 im ersten Zustand. Eine x-Achse COCU in FIG 3 stellt den Füllgrad von Kupfer in Form von Vol.-% dar, der den volumetrischen Anteil von Kupfer am Hartschaumsystem 20 im ersten Zustand angibt. Die linke Y-Achse stellt eine Wärmeleitfähigkeit TC dar. Deren Einheit ist W/(m K). Die rechte y-Achse EF stellt den Expansionsfaktor dar. Innerhalb dieses Diagramms sind mehrere Werte für den Expansionsfaktor EFW beziehungsweise für die Wärmeleitfähigkeit TCW aufgetragen.

Bei einem Füllgrad von 0 Vol.-%, was bedeutet dass kein Kupfer beigemischt wurde, liegt die Wärmeleitfähigkeit TC bei etwa 0,05 W/(m K). Der dazugehörige Expansionsfaktor EF liegt in diesem Fall zwischen 2,5 und 3. Mit steigendem Füllgrad, also einer erhöhten Volumenkonzentration von Kupfer in dem Hartschaumsystem 20 sind zwei Tendenzen auszumachen. Zum einen sinkt mit steigendem Füllgrad der Expansionsfaktor EF. Zum anderen steigt die Wärmeleitfähigkeit TC bis zu 0,2 W/(m K). Da Kupfer eine deutlich geringere Ausdehnung als der Hartschaum 24 aufweist, ist das Absinken des Expansionsfaktors EF mit zunehmendem Füllgrad nachvollziehbar. Die ansteigende Wärmeleitfähigkeit TC mit zunehmendem Füllgrad erklärt sich durch die erhöhte Konzentration bzw. Volumenkonzentration von Kupferpartikeln in dem Hartschaumsystem 20. Kupfer hat im Vergleich zu dem Hartschaum 24 eine deutlich höhere Wärmeleitfähigkeit TC. Sie liegt in etwa bei 400 W/(m K), während die Wärmeleitfähigkeit TC des Hartschaumsystems ohne Kupfer bei etwa 0,05 W/(m K) liegt.

FIG 4 zeigt ebenfalls wie FIG 3 auf der linken y-Achse die Wärmeleitfähigkeit TC und auf der rechten y-Achse den Expansionsfaktor EF. Die x-Achse COB in FIG 4 repräsentiert einen volumetrischen Anteil von Bornitrid am gesamten Füllstoff, der in FIG 4 Kupfer und Bornitrid aufweist. Das heißt in FIG 4 wurden dem Hartschaumsystem 20 zwei unterschiedliche Partikel zugesetzt. Diese beiden zugesetzten Stoffe sind zum einen Kupfer und zum anderen Bornitrid. Die x-Achse COB gibt nun an, wie groß der volumetrische Anteil von Bornitrid an den insgesamt zugesetzten Partikeln ist. Die zugesetzten Partikel Kupfer und Bornitrid weisen eine Gesamtvolumenkonzentration von 25 Vol.-% im Hartschaumsystem 20 auf. Dabei beziehen sich diese 25 Vol.-% auf das Hartschaumsystem 20 im ersten Zustand.

Die in FIG 4 dargestellten Messwerte wurden bei einem Versuch mit 2 mm dicken Schaumplatten mit Kupferfaserfüllstoff als Probekörper gewonnen. Die Wärmeleitfähigkeit TC wurde aufgrund einer gegebenen Anisotropie in zwei Richtungen gemessen. Zum einen wurde die Wärmeleitfähigkeit TC durch eine gedachte Plattenebene und längs dieser Plattenebene gemessen. Dies bedeutet, dass es zwei Werte bezüglich der Wärmeleitfähigkeit TC in diesem Versuch gibt. Die eine Wärmeleitfähigkeit TC steht senkrecht auf der Plattenebene, die andere Wärmeleitfähigkeit TC gibt die thermische Wärmeleitfähigkeit parallel dieser Plattenebene an. In FIG 4 wird die Wärmeleitfähigkeit TC parallel zur Plattenebene als TCI bezeichnet, senkrecht dazu wird sie als TCN bezeichnet. Die Werte zu den Expansionsfaktoren EF werden in FIG 4 mit EFW bezeichnet. Aufgrund der Schäumungsreaktion, also der Transformation des Hartschaumsystems 20 von dem ersten in den zweiten Zustand, und der damit verbundenen Expansion des Hartschaums 24, ergibt sich vorzugsweise eine Ausrichtung der Kupferfasern in Plattenrichtung. Die Wärmeleitfähigkeit TCN senkrecht zu der Plattenebene zwischen 0,2 und 0,4 W/(m K). Dazu wurden Kupferpartikel mit einer Länge von 0,5 mm und einem Durchmesser von 30 µm eingesetzt. Der Expansionsfaktor EF bei allen Versuchen, welche in FIG 4 gezeigt sind, beträgt in etwa 2.

Bei 0 Vol.-% Bornitrid liegt im Beispiel von FIG 4 25 Vol.-% Kupfer als beigemischter Zusatz in dem Hartschaumsystem 20 vor. Entsprechend liegt bei einem Volumenanteil von 100 % des Bornitrids kein Kupfer in dem Hartschaumsystem 20 vor. Die volumetrische Gesamtkonzentration der Summe der beiden zugesetzten Stoffe Kupfer und Bornitrid beträgt in FIG 4 stets konstant 25 Vol.-% bezogen auf das Hartschaumsystem 20 im ersten Zustand. Obwohl Kupfer eine höhere Wärmeleitfähigkeit TC als Bornitrid aufweist, zeigt die FIG 4 deutlich, dass bei einem Anteil von 0 Vol.-% Bornitrid am Füllstoff die Wärmeleitfähigkeit entlang der Plattenebene TCI nicht maximal ist. Sie beträgt in diesem Fall in etwa 0,6 W/(m K). Hingegen zeigt FIG 4, dass bei einem Anteil von Bornitrid am Füllstoff zwischen 20 und 30 Vol.-% die Wärmeleitfähigkeit längs der Plattenebene TCI deutlich ansteigt. Sie erreicht einen Wert von etwa 1,15 W/(m K). Steigt der Anteil des Bornitrids am Füllstoff weiter an, so ist gemäß FIG 4 ein Abfall der Wärmeleitfähigkeit entlang bzw. parallel der Plattenebene TCI zu beobachten.

Damit zeigt FIG 4, dass das Maximum der Wärmeleitfähigkeit TC des dazugehörigen Hartschaumsystems 20 in etwa bei 20 - 25 Vol.-% Bornitrid bezogen auf den Füllstoff liegt. Dies kann dadurch erklärt werden, dass eine gewisse Menge an Bornitrid notwendig ist, um die faserförmigen Kupferpartikel thermisch miteinander zu koppeln. Ein direktes Koppeln der Kupferpartikel durch Zugabe weiterer Kupferpartikel ist aufgrund der einzuhaltenden Perkolationsschwelle nicht möglich. Die Perkolationsschwelle wirkt allerdings lediglich limitierend in Bezug auf Konzentration der metallischen Partikel 22, hier als faserförmige Kupferpartikel.

Das heißt prinzipiell kann beliebig viel nicht-metallisches Material beziehungsweise nicht-metallische Partikel 21 beigemischt werden, ohne dass dabei die Perkolationsschwelle bezüglich der metallischen Partikel überschritten werden würde. Jedoch verändern sich bei der Zugabe von nicht-metallischen Partikeln die rheologischen Eigenschaften des Hartschaums 24 im ersten Zustand. Beträgt die Konzentration der zugesetzten Partikel mehr als 30 Vol.-% des Hartschaums 24 im ersten Zustand, erhöht sich in der Regel die Viskosität des Hartschaums 24 im ersten Zustand. Anders ausgedrückt wird der Hartschaum 24 im ersten flüssigen Zustand bei hohen Konzentrationen zugesetzter metallischer oder nicht-metallischer Partikel zäh. Dies kann die Verarbeitung beziehungsweise das Vermischen des Hartschaums 24 mit den zugesetzten Partikeln deutlich erschweren. Daher ist es sinnvoll, in mehreren Versuchsreihen ein optimales Vermischungsverhältnis von metallischen und nicht-metallischen Partikeln zu finden. Darüber hinaus können solche Versuche ermitteln, wie viel zugesetzte Partikel insgesamt dem Hartschaum 24 im ersten Zustand zugesetzt werden können. Gemäß FIG 4 ist bei einer Gesamtkonzentration der zugesetzten Partikel von 25 Vol.-% eine Wärmeleitfähigkeit TC von 1,15 W/(m K) möglich. Dieser Wert wir gemäß FIG 4 dann erreicht, wenn der volumetrische Anteil von Bornitrid am Gesamtfüllstoff (Kupfer und Bornitrid) in etwa 25 Vol.-% beträgt.

FIG 4 zeigt jene Versuche, welche alle eine Gesamtfüllstoffkonzentration von 25 Vol.-% bezogen auf den ersten Zustand des Hartschaumsystems 20 aufweisen. Bei diesen Versuchen wurde ein Zwei-Komponenten-PU-Hartschaumsystem eingesetzt. Dabei handelt es sich vornehmlich um ein Polyol-Isocyanat-System. Ein noch höherer Füllgrad gestaltete sich aufgrund der Verarbeitungsrheologie als teilweise schwierig. Der zugesetzte Füllstoff weist bei allen in FIG 4 gezeigten Versuchen Kupfer und Bornitrid auf. Durch eine Variation der Kupfer- beziehungsweise Bornitrid-Partikel hinsichtlich ihrer Größe und ihrer Form konnte der Füllgrad von 25 Vol.-% erreicht werden. Die Bornitrid-Plättchen weisen eine Dicke von etwa 40 µm auf, die Kupferfasern weisen eine Länge von 0,5 mm sowie eine Dicke von 30 µm auf. Der Gesamtfüllgrad von 25 Vol.-% bezieht sich dabei auf das Hartschaumsystem 20 im ersten Zustand, also vor der Schäumung.

Das Hartschaumsystem 20 ermöglicht nicht nur eine effektive thermische Anbindung von Komponenten, welche entwärmt werden sollen. Es ermöglicht auch eine mechanische Fixierung. Insbesondere kann das Hartschaumsystem 20 in einem Elektromotor oder in der Elektronik eingesetzt werden, wo es oft erwünscht ist, auftretende Abwärme sicher abzuführen. Ein elektrischer Kurzschluss soll dabei natürlich vermieden werden. Bremsanlagen, die nicht vergossen werden können, können mit dem Hartschaumsystem 20 thermisch mit anderen Komponenten gekoppelt werden und zugleich mechanisch stabilisiert werden. Dies gelingt insbesondere dadurch, dass das Hartschaumsystem 20 sich im zweiten Zustand verfestigt, entsprechend ausdehnt und stabile Stützstrukturen bilden kann. Dabei ist das Hartschaumsystem 20 stets elektrisch isolierend, da die Konzentration der metallischen Partikel auf die Perkolationsschwelle beschränkt ist.

Das Hartschaumsystem 20 kann auch bei elektrischen Bauteilen, in denen kein bewegliches Teil integriert ist, eingesetzt werden sowie auftretende Wärme zuverlässig abführen. Das Hartschaumsystem 20 ermöglicht eine Verbesserung der Chemikalien-Umweltverträglichkeit von Bauteilen, da das Schaummaterial, also der Hartschaum 24, die Komponenten komplett umschließen und passivieren kann. Das Hartschaumsystem 20 eignet sich oft auch als multifunktionale Leichtbaukomponente aufgrund der wesentlich geringeren Dichte von etwa 1 g/cm³ im Vergleich zur Vergussmasse 12. Vergussmassen 12 mit einer Wärmeleitfähigkeit TC von über 1 W/(m K) sind meist mit thermisch leitfähigen Partikeln gefüllt und besitzen somit eine Dichte von mehr als 1,5 g/cm³. Damit ist das Hartschaumsystem 20 in der Regel deutlich leichter als die Vergussmasse 12. Aufgrund der möglichen Passivierung von Komponenten mittels des Hartschaumsystems 20 kann in bestimmten Fällen auf ein Gehäuse verzichtet werden. Eine gehäuselose Anwendung wird somit ermöglicht.

Vorteilhafte Eigenschaften können sich auch hinsichtlich des Explosionsschutzes ergeben, da weniger freies Volumen vorhanden ist. Werden beispielsweise bewegliche Komponenten von dem Hartschaumsystem 20 umschlossen, so kann bei einer Explosion derselben deren kinetische Energie durch das Hartschaumsystem 20 zumindest teilweise aufgenommen werden.

Unter Umständen können auch weitere mechanische Fixierungen wie zum Beispiel der Einsatz von Schrauben überflüssig werden. Da das Hartschaumsystem 20 Komponenten komplett isolieren kann, können die umschlossenen Komponenten gegenüber Flugstaub, Metallpartikeln oder korrosiven Materialien geschützt werden.

Bei Brandgasmotoren kann das Hartschaumsystem 20 im Brandfall die Lebensdauer des Motors erhöhen, da der Brandgasfluss gehemmt wird. Ein eventuelles Auftreten eines Feuers in einem Elektromotor kann mithilfe des Hartschaumsystems 20 gehemmt werden. Im Idealfall wird ein Übergreifen des Brandes auf die Fahrzeugkabine dadurch unterbunden. Mithilfe des Hartschaumsystems 20 können Kondensationserscheinungen an metallischen Komponenten wie zum Beispiel bei einer Wicklung im Elektromotor verhindert werden, da die Kontaktflächen deutlich reduziert sind und das Hartschaumsystem 20 die Oberfläche bildet. Anstelle der häufig eingesetzten Zwei-Komponenten-Hartschaumsysteme können auch Ein-Komponenten-Hartschaumsysteme oder andere Mehr-Komponenten-Hartschaumsysteme zum Einsatz kommen.

Insgesamt ist festzustellen, dass das erfindungsgemäße Hartschaumsystem 20 eine höhere thermische Leitfähigkeit gegenüber üblichen Hartschaumsystemen ohne Zusätze bereitstellen kann. Dabei bleibt das Hartschaumsystem 20 aufgrund der Begrenzung der Menge der metallischen Partikel 22 dennoch elektrisch isolierend, was Kurzschlüsse idealerweise komplett unterbindet. Somit kann das Hartschaumsystem 20 als elektrischer Isolator und zugleich als Wärmebrücke eingesetzt werden. Aufgrund der Volumenausdehnung des Hartschaumsystems 20 vom ersten in den zweiten Zustand können auch unerreichbare Zwischenräume gefüllt werden und thermisch kontaktiert werden. Die zugesetzten metallischen Partikel 22 erhöhen aufgrund ihrer vergleichsweise hohen Wärmeleitfähigkeit TC die Gesamtwärmeleitfähigkeit des Hartschaumsystems 20. Durch ein optimales Mischungsverhältnis mehrerer unterschiedlicher zugesetzter Partikel kann die Wärmeleitfähigkeit TC des Hartschaumsystems 20 zusätzlich gesteigert werden. Dabei werden insbesondere Mischungen verwendet, welche eine Kombination von metallischen und nicht-metallischen Partikeln aufweisen.

Vorzugsweise werden Kupferpartikel mit Bornitridpartikel vermischt.

Mit Hilfe des Hartschaumsystems 20 kann die Leistungsdichte von elektrischen Maschinen gesteigert werden, da deren Komponenten und Bauteile zur Entwärmung verschäumt werden können. Das Hartschaumsystem 20 kann auch eine Qualitätsverbesserung ermöglichen, da die Komponenten und Bauteile zum Beispiel vor Flugstaub einer Bremse passiviert werden können, ohne diese Bauteile thermisch zu isolieren. Darüber hinaus ist die Anwendung des Hartschaumsystems 20 im Vergleich zum Einsatz der Vergussmasse 12 in vielen Fällen deutlich günstiger und verarbeitungstechnisch leichter umzusetzen. Grundsätzlich kann dem Hartschaum 24 im ersten Zustand auch ein anderes Material als Kupfer oder Bornitrid beigemischt werden. Alle Verbundwerkstoffe, welche im Vergleich zu dem Hartschaum 24 im ersten Zustand eine höhere thermische Leitfähigkeit aufweisen, können als Zusatzstoff in Betracht gezogen werden. Bei metallischen Zusatzstoffen muss jedoch beachtet werden, dass bei der Zugabe der metallischen Partikel 22 die Perkolationsschwelle nicht überschritten wird. Hinsichtlich der Zugabe von nicht-metallischen Partikeln 21 gilt diese Limitierung nicht. Bei nicht-metallischen Partikeln 21 werden meist gasförmige Stoffe nicht als Füllstoffe betrachtet. Jedoch kann aufgrund veränderter rheologischer Eigenschaften die Beimischung von zusätzlichen Partikeln nicht beliebig gesteigert werden. Die zugesetzten Partikel können sich in ihrer Geometrie jeweils untereinander unterscheiden. Die Bornitridpartikel sind im Beispiel von FIG 4 beispielsweise als Plättchen ausgebildet, während die Kupferpartikel beispielsweise als Fasern ausgebildet sind. Es ist auch möglich, Partikel der gleichen Art in unterschiedlichen Formen beizumischen. So könnte man beispielsweise zu den plättchenförmigen Bornitridpartikeln auch zusätzlich kugelförmige Bornitridpartikel beimischen. Analoges gilt auch für die Kupferpartikel. Gemäß FIG 4 wurde bei einem Füllgrad von 25 Vol.-% und bei einem 25 Vol.-% Anteil des Bornitrids am Füllstoff eine thermische Leitfähigkeit von etwa 1,15 W/(m K) realisiert. Das heißt die zugesetzten Partikel wiesen Kupfer und Bornitridpartikel auf. Beträgt der Anteil des Bornitrids an diesem zugesetzten Füllstoff in etwa 25 Vol.-% so ergibt sich laut FIG 4 die Wärmeleitfähigkeit TC von ca. 1,15 W/(m K). Damit ist gezeigt, dass durch diese geschickte Beimischung von Kupfer und Bornitrid in den Hartschaum 24 die Wärmeleitfähigkeit TC des Hartschaumsystems 20 deutlich gesteigert werden kann. Ein Hartschaumsystem ohne zusätzlichen Füllstoff weist gemäß FIG 3 in etwa eine Wärmeleitfähigkeit TC von 0,05 W/(m K) auf. Damit kann gezeigt werden, dass durch eine geschickt gewählte Beimischung von Kupfer- und Bornitridpartikeln die Wärmeleitfähigkeit TC des Hartschaumsystems 20 um wenigstens einen Faktor 20 gesteigert werden kann.

## Patentansprüche

1. Hartschaumsystem (20), das einen Hartschaum (24) aufweist und aus einem ersten Zustand in einen zweiten Zustand überführbar ist,
- wobei der erste Zustand flüssig ist,
- der zweite Zustand fest ist und
- das Volumen des Hartschaumsystems (20) im zweiten Zustands um wenigstens 5 % größer ist als im ersten Zustands,
**dadurch gekennzeichnet dass**,
- dem Hartschaumsystem (20) zur Erhöhung der thermischen Leitfähigkeit metallische Partikel (22) homogen als Zusatz beigemischt sind und
- die Konzentration der beigemischten metallischen Partikel (22) unterhalb der Perkolationsschwelle liegt.

2. Hartschaumsystem (20) nach Anspruch 1, wobei ausschließlich metallische Partikel (22) als Zusatz beigemischt sind.

3. Hartschaumsystem (20) nach Anspruch 1 oder 2, wobei der Hartschaum (24) als Ein-Komponenten-Hartschaum oder Zwei-Komponenten-Hartschaum ausgebildet ist.

4. Hartschaumsystem (20) nach einem der vorigen Ansprüche, wobei der Hartschaum (24) als Zwei-Komponenten-Polyol-Isocyanat Hartschaum ausgebildet ist.

5. Hartschaumsystem (20) nach einem der vorigen Ansprüche, wobei der Hartschaum (24) im ersten Zustand bei Kontakt mit Umgebungsluft bei einer Raumtemperatur, die insbesondere innerhalb des Intervalls von 15°C bis 25°C liegt, sich von dem ersten Zustand in den zweiten Zustand transformiert.

6. Hartschaumsystem (20) nach einem der vorigen Ansprüche, wobei der Hartschaum (24) sich nur bei Temperaturen deutlich oberhalb der Raumtemperatur, insbesondere bei Temperaturen über 100 °C, sich von dem ersten Zustand in den zweiten Zustand transformiert.

7. Hartschaumsystem (20) nach einem der vorigen Ansprüche, wobei die beigemischten metallischen Partikel (22) faserförmig ausgebildet sind.

8. Hartschaumsystem (20) nach Anspruch 7, wobei die faserförmigen metallischen Partikel (22) jeweils eine erste Ausdehnung und eine zweite Ausdehnung aufweisen, wobei die zweite Ausdehnung die erste Ausdehnung um mindestens einen Faktor 10, bevorzugt Faktor 100, übersteigt.

9. Hartschaumsystem (20) nach einem der Ansprüche 3 bis 8, wobei dem Hartschaum zusätzlich zu den metallischen Partikeln (22) weitere nicht-metallische Partikel (21) zur Verbesserung der thermischen Leitfähigkeit beigemischt sind.

10. Hartschaumsystem (20) nach Anspruch 9, wobei die nicht metallischen Partikel (21) aus Bornitrid ausgebildet sind.

11. Hartschaumsystem (20) nach Anspruch 10, wobei die metallischen Bornitrid Partikel als Plättchen ausgebildet sind.

12. Hartschaumsystem (20) nach einem der vorigen Ansprüche, wobei die beigemischten Partikel faserförmig, kugelförmig, plattenförmig oder als Mischung derselben ausgebildet sind.

13. Verfahren zur Herstellung eines elektrisch isolierenden Hartschaumsystems (20) mit verbesserte thermischer Leitfähigkeit durch Ausführen folgender Verfahrensschritte:
a) Bereitstellen einer oder mehrerer Komponenten zur Herstellung eines Hartschaums (24), der nach einer Umwandlung der einen oder mehreren Komponenten in den Hartschaum (24) in einem ersten Zustand flüssig ist und vom diesem ersten Zustand in einen festen zweiten Zustand überführbar ist, wobei das Volumen des Hartschaumsystems (20) im zweiten Zustand um wenigstens 5 % das Volumen des Hartschaumsystems (20) im ersten Zustand übersteigt,
b) Homogenes Beimischen von metallischen Partikel (22) zu der einen Komponente oder der mehreren Komponenten, wobei eine Konzentration der metallischen Partikel (22) die Perkolationsschwelle nicht überschreitet, sodass das Hartschaumsystem (20) im zweiten Zustand nicht elektrisch leitend wird.

14. Verfahren nach Anspruch 13, wobei der einen Komponente oder den mehreren Komponenten vor der Umwandlung zu dem Hartschaum (24) im ersten Zustand zusätzlich zur Erhöhung der thermischen Leitfähigkeit nicht-metallische Partikel (21), insbesondere Bornitrid, homogen beigemischt werden.
